# FASCICULE DE BREVET EUROPEEN

(11) **EP 4 381 177 B1**
(45) Date de publication et mention de la délivrance du brevet: **29.04.2026**
(21) Numéro de dépôt: 22758573.4
(22) Date de dépôt: 02.08.2022
(51) Int. Cl.: B64D 27/33, F01D 7/00, B64C 11/38, B64D 35/00, B64D 41/00, F01D 15/10, F01D 25/20

(54) **TURBOPROPULSEUR APTE À FOURNIR UNE FONCTION DE HÉLICE DE SECOURS ET AÉRONEF COMPORTANT UN TEL TURBOPROPULSEUR**
TURBOPROP ZUR BEREITSTELLUNG EINER NOTFALL-PROPELLERFUNKTION UND FLUGZEUG MIT SOLCH EINEM TURBOPROP
TURBOPROP CAPABLE OF PROVIDING AN EMERGENCY PROPELLER FUNCTION AND AIRCRAFT COMPRISING SUCH A TURBOPROP

(30) Priorité: 04.08.2021 FR 2108484
(43) Date de publication de la demande: 12.06.2024
(73) Titulaire: Safran Helicopter Engines, 64510 Bordes (FR)
(72) Inventeur: APOSTIN, Lucie Stéphanie, 77550 MOISSY-CRAMAYEL (FR); CHARTRAIN, Didier Claude, 77550 MOISSY-CRAMAYEL (FR); PRESSE, Jean-Michel, 77550 MOISSY-CRAMAYEL (FR)
(74) Mandataire: Santarelli
(86) Numéro de dépôt international: PCT/FR2022/051548
(87) Numéro de publication internationale: WO 2023/012435

(56) Documents cités:
- EP-A2- 1 031 717
- GB-A- 684 490
- US-B2- 7 172 391
- US-B2- 9 973 058

## Description

### Domaine technique

L'invention concerne le domaine des turbomachines et plus précisément celui des turbopropulseur.

L'invention a plus précisément pour objet un turbopropulseur, un aéronef comportant un tel turbopropulseur et des procédés de commande de tels turbopropulseur et aéronef.

### État de l'art antérieur

En cas de panne moteur en vol d'un aéronef, il est connu de déployer une éolienne de secours, également connue sous la terminologie anglaise de « Ram air turbine », pour fournir une source d'énergie de secours à l'aéronef et ainsi assurer la continuité de fonctionnement des systèmes de bord essentiels tels que les contrôles de vol et les instruments de vol critiques.

Une telle éolienne de secours comprend une hélice autonome, un générateur électrique dédié et un système de vérin qui permet le déploiement de l'éolienne en cas de besoin. De ce fait, l'éolienne de secours présente une masse embarquée non négligeable ceci alors que, dans un fonctionnement normal de l'aéronef, elle n'est nullement mise en œuvre.

De ce fait, il y aurait intérêt à supprimer une telle éolienne de secours dans le cas où, en cas de panne moteur, il serait possible de fournir de l'énergie par une source alternative.

### Exposé de l'invention

L'invention vise ainsi à résoudre le problème exposé ci-dessus et a ainsi pour objet de fournir une source d'énergie alternative à une éolienne de secours, ceci avec une masse embarquée réduite en comparaison avec une éolienne de secours.

L'invention concerne à cet effet un turbopropulseur comprenant :
- une hélice,
- un arbre porte-hélice portant l'hélice, l'hélice étant une hélice à pas variable présentant un pas de l'hélice,
- une machine électrique tournante présentant au moins une première configuration dans laquelle elle est couplée mécaniquement à l'arbre porte hélice, et
- au moins une pompe à huile configurée pour alimenter un circuit hydraulique de réglage du pas de l'hélice,

La pompe à huile étant configurée pour être entraînée électriquement. La pompe à huile est également configurée pour alimenter en fluide des paliers du turbopropulseur.

Une telle pompe à huile, en étant configurée pour être entraînée électriquement et contrairement aux pompes à huile de l'art antérieur, permet d'alimenter le circuit hydraulique de réglage du pas de l'hélice, alors que le turbopropulseur ne contribue pas à la propulsion. Ainsi, il est possible de régler le pas de l'hélice afin d'entraîner l'hélice en rotation par effet de moulinet et donc de mettre en rotation l'arbre porte-hélice et la machine tournante électrique qui lui est couplée mécaniquement. Une telle rotation de la machine tournante électrique permet de fournir une source d'énergie de secours en cas de défaillance des turbopropulseurs de l'aéronef ceci sans qu'il soit nécessaire d'équiper l'aéronef d'équipement de sécurité supplémentaire. Ainsi il est possible de limitée la masse embarquée de l'aéronef.

On notera, de plus, qu'une telle configuration de turbopropulseur, autorise, outre de fournir une fonction d'éolienne de secours, un réglage fin du pas d'hélice. Ainsi, il est possible d'adapter le pas d'hélice à la vitesse de l'aéronef et de fournir une production d'énergie suffisante sur une plage de vitesse de l'aéronef relativement importante. la pompe à huile peut être une pompe à huile moteur configurée pour en outre être entraînée par une turbine du turbopropulseur, la pompe à huile moteur étant préférentiellement couplée mécaniquement à ladite turbine au moyen d'une roue-libre. De cette manière, il est possible d'utiliser la pompe à huile moteur du turbopropulseur entraînée électriquement dans le cadre du mode éolienne de secours du turbopropulseur tout en gardant une configuration classique du turbopropulseur lorsque ce dernier participe à la propulsion de l'aéronef.

On notera que dans une configuration classique la pompe à huile peut être entrainée par la turbine à gaz, plus précisément par sa turbine haute pression et l'arbre haute pression auquel ladite turbine haute pression est couplée mécaniquement.

Par pompe à huile moteur, on entend ci-dessus et dans le reste de l'invention, la pompe du turbopropulseur configurée pour alimenter à partir d'un réservoir d'huile du turbopropulseur les différents éléments du turbopropulseur devant être lubrifiés ou alimentées en pression d'huile dont, notamment, les paliers et le circuit hydraulique de réglage du pas de l'hélice. On notera, qu'en complément à la pompe moteur, le turbopropulseur peut comprendre des pompes secondaires, dites dédiées, telles qu'une pompe dédiée d'un système de gestion du pas d'hélice ou encore une pompe de récupération d'huile.

La pompe à huile peut être une pompe à huile moteur hybride configurée pour être entraînée soit par la turbine, soit par un moteur électrique interne à la pompe à huile moteur.

Avec une telle configuration, la conception de la pompe à huile moteur n'a pas à être significativement adaptée puisque son entraînement électrique est obtenu par un élément extérieur, le moteur électrique, comme c'est le cas pour une pompe à huile moteur d'un turbopropulseur de l'art antérieur où c'est la turbine qui permet l'entraînement.

La pompe à huile peut être une pompe électrique auxiliaire alimentant le circuit hydraulique de réglage d'un pas de l'hélice en parallèle à une pompe à huile moteur du turbopropulseur entraînée en rotation par une turbine du turbopropulseur.

De cette manière, l'invention peut aisément être adaptée aux turbopropulseurs actuels par l'ajout de la pompe électrique auxiliaire et du circuit d'huile auxiliaire correspondant. Le turbopropulseur peut comprendre en outre un système de gestion du pas d'hélice comportant une pompe à huile dédiée et une servovalve, la pompe à huile dédiée et la servovalve étant alimentées en huile par la pompe à huile, le système de gestion du pas de l'hélice étant agencé entre la pompe à huile et le circuit hydraulique de réglage du pas de l'hélice, le turbopropulseur comprenant en outre un système de contournement adapté pour, lorsque la pompe à huile est entraînée électriquement, autoriser une alimentation en huile du circuit hydraulique de réglage d'un pas de l'hélice via la servovalve en contournant la pompe à huile dédiée du système de gestion du pas d'hélice.

Un tel système de contournement permet de limiter la pression d'huile nécessaire pour alimenter le circuit hydraulique de réglage du pas de l'hélice et permet ainsi d'optimiser le passage du turbopropulseur dans le mode éolienne de secours.

L'invention concerne en outre un aéronef comprenant au moins un turbopropulseur selon l'invention.

Un tel aéronef, n'ayant pas à comprendre d'éolienne de secours, il peut présenter une masse embarquée réduite en comparaison avec les aéronefs de l'art antérieur qui doivent nécessairement comprendre une éolienne de secours.

L'invention concerne en outre un procédé de commande d'un turbopropulseur en tant qu'éolienne de secours, dans lequel le turbopropulseur est un turbopropulseur selon l'invention, le procédé comprenant les étapes suivantes :
- entraîner la pompe à huile électriquement de manière à alimenter en huile le circuit hydraulique de réglage d'un pas de l'hélice,
- régler le pas de l'hélice afin de générer l'effet de moulinet pour entraîner l'hélice en rotation,
- la machine électrique tournante étant entraînée en rotation par l'arbre porte hélice en raison du couplage mécanique entre eux, générer de l'électricité par la machine électrique tournante.

Un tel procédé permet, à partir d'un turbopropulseur selon l'invention, de passer ledit turbopropulseur dans un mode de fonctionnement éolienne de secours et ainsi d'alimenter en électricité l'aéronef en énergie lorsque l'ensemble des turbopropulseurs de l'aéronef ont cessé de fonctionner comme propulseur.

L'invention concerne en outre un procédé de commande d'un aéronef comprenant une pluralité de turbopropulseurs selon l'invention, comprenant, alors que l'aéronef est en vol, les étapes suivantes :
- la pluralité de turbopropulseurs étant passé à l'arrêt, réception d'une requête de placement d'au moins un turbopropulseur dans un mode de fonctionnement du type éolienne de secours,
- mise en œuvre par un turbopropulseur de la pluralité de turbopropulseurs d'un procédé de commande selon l'invention.

Avec un tel procédé, il est possible d'alimenter l'aéronef en énergie à partir d'au moins un des turbopropulseurs alors que la pluralité de turbopropulseurs a cessé de fonctionner. Lors de la mise en œuvre par un turbopropulseur de la pluralité des turbopropulseurs d'un procédé de commande selon l'invention le turbopropulseur mettant en œuvre le procédé de commande selon l'invention peut être le turbopropulseur parmi la pluralité des turbopropulseurs qui est le dernier à s'être arrêté.

Il peut en outre être prévu :
- dans le cas où, lors de la mise en œuvre du procédé de commande par le dernier turbopropulseur à s'être arrêtée, celui-ci s'avérant incapable de passer en mode éolienne de secours, identification parmi les autres turbopropulseurs de la pluralité de turbopropulseurs celui présentant une température d'huile la plus élevée,
- mise en œuvre par le turbopropulseur identifié du procédé de commande selon l'invention.

De cette manière, avec de telles possibilités, le turbopropulseur passant en mode éolienne de secours est celui présentant les meilleures conditions de fluidité de l'huile pour la mise en œuvre du mode éolienne de secours.

### Brève description des dessins

La présente invention sera mieux comprise à la lecture de la description d'exemples de réalisation, donnés à titre purement indicatif et nullement limitatif, en faisant référence aux dessins annexés sur lesquels :
[Fig. 1] illustre un turbopropulseur selon l'invention.
[Fig. 2] illustre le schéma cinématique des différents éléments du turbopropulseur lors de l'amorçage d'un mode de fonctionnement éolienne de secours du turbopropulseur selon un premier mode de réalisation de l'invention,
[Fig. 3] illustre le schéma cinématique des différents éléments du turbopropulseur en mode de fonctionnement éolienne de secours d'un turbopropulseur selon le premier mode de réalisation l'invention.
[Fig. 4] illustre schématiquement le système de gestion du pas d'hélice d'un turbopropulseur selon le premier mode de réalisation de l'invention.
[Fig. 5] illustre le schéma cinématique des différents éléments du turbopropulseur lors de l'amorçage du mode de fonctionnement éolienne de secours du turbopropulseur selon un deuxième mode de réalisation de l'invention dans lequel le turbopropulseur comprend une pompe à huile moteur hybride,
[Fig. 6] illustre le schéma cinématique des différents éléments du turbopropulseur en mode de fonctionnement éolienne de secours d'un turbopropulseur selon le deuxième mode de réalisation l'invention.
[Fig. 7] illustre le schéma cinématique des différents éléments du turbopropulseur lors de l'amorçage du mode de fonctionnement éolienne de secours du turbopropulseur selon un troisième mode de réalisation de l'invention dans lequel le turbopropulseur comprend une pompe à huile auxiliaire dédiée au mode de fonctionnement éolienne de secours,
[Fig. 8] illustre le schéma cinématique des différents éléments du turbopropulseur en mode de fonctionnement éolienne de secours d'un turbopropulseur selon le troisième mode de réalisation l'invention.
[Fig. 9] illustre schématiquement le système de gestion du pas d'hélice d'un turbopropulseur selon le troisième mode de réalisation de l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

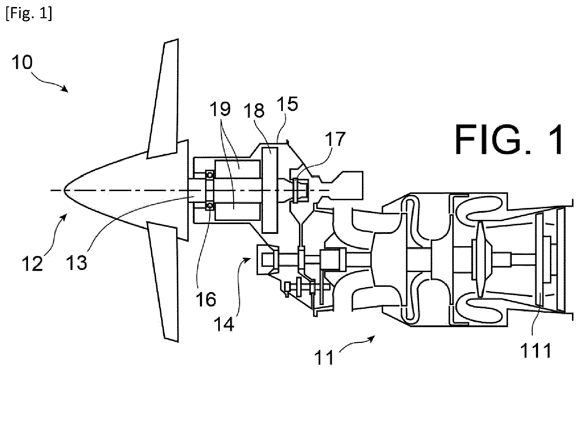

La figure 1 illustre un turbopropulseur 10, selon l'invention qui présente, de ce fait, un mode de fonctionnement du type éolienne de secours.

Selon ce présent mode de réalisation le turbopropulseur 10 est un turbopropulseur à turbine libre. Ainsi, le turbopropulseur 10 comprend une turbine à gaz 11 comprenant une turbine haute pression, non référencée, entraînant en rotation un arbre de turbine 14 et un compresseur, non référencé, et une turbine libre 111 qui entraîne un arbre secondaire, non référencé, de la turbine à gaz, concentrique à l'arbre de turbine 14.

Le turbopropulseur 10 comprend ainsi comme représenté sur la figure 1, la turbine à gaz 11, une hélice 12, un arbre porte-hélice 13, s'étendant vers la turbine à gaz 11 et étant couplé, comme cela sera décrit plus après, à la turbine libre 111 au moyen d'une transmission. L'arbre porte-hélice 13 est entouré par un carter 15 de protection. Il est soutenu dans le carter 15 par des roulements 16 et 17. L'un des roulements 16 est proche de l'hélice 12, et l'autre des roulements 17 est adjacent à une roue dentée 18 d'entraînement de l'arbre porte-hélice 13, qui engrène avec la transmission mentionnée ci-dessus. La machine électrique tournante 19 est, dans cet exemple de l'invention, disposée concentrique autour de l'arbre porte-hélice 13, entre le premier roulement 16 et la roue dentée 18, en étant entourée par le carter 15.

Ainsi, dans le présent mode de réalisation, le turbopropulseur est un turbopropulseur « classique ».

On notera que, dans le présent mode de réalisation, on est dans une configuration prise avant, une telle configuration est bien en entendu fournie à titre d'illustration de l'invention, celle ne se limitant pas à cette seule configuration. Ainsi, l'invention est notamment applicable à des turbocompresseurs présentant une configuration en prise arrière.

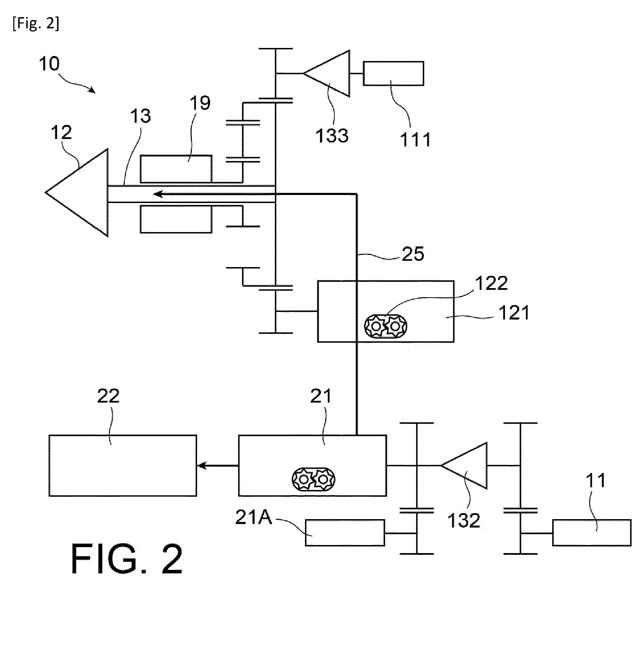

Dans le présent mode de réalisation, la turbine à gaz 11 étant du type à turbine libre, elle comprend la turbine haute pression et son arbre de turbine 14, et la turbine libre 111 et son arbre secondaire. Pour plus de précision concernant la cinématique d'entraînement fournie par le turbopropulseur dans le cadre du présent mode de réalisation de l'invention, il est renvoyé à la description de la figure 2.

On notera, bien entendu, que si la présente configuration du turbopropulseur 10 décrite ci-dessus est conforme à l'enseignement du document FR 3057029, elle ne se limite pas à cette seule configuration de la machine électrique tournante 19 dans laquelle la machine électrique tournante est agencée concentrique à l'arbre porte-hélice 13. Ainsi, par exemple, le présent enseignement peut aisément être adapté à une configuration déportée telle qu'enseignée par le document US 2017/321601.

On notera également que, si la machine électrique tournante 19 est, dans le cadre de ce mode de réalisation, une simple machine électrique tournante apte à fournir une fonction génératrice, il est également envisageable, sans que l'on sorte de l'invention, qu'une telle machine électrique tournante 19 offre une fonction de propulsion électrique. De même, la machine électrique tournante 19 peut présenter des fonctions supplémentaires, telles que celles d'alimenter un circuit de dégivrage des pales selon la possibilité enseignée par le document US 2019/233128. En effet, compte tenu des similarités entre le turbopropulseur enseigné par le document FR 3057029 et celui enseigné par le document US 2019/233128, l'homme du métier est parfaitement à même d'appliquer l'enseignement du document US 2019/233128 au turbopropulseur selon le présent mode de réalisation. A cet effet, les parties du document US 2019/233128 liées à la figure 2 correspondant aux paragraphes [14] à [20] et la figure 2 sont incorporées par référence au présent document.

Afin d'alimenter en fluide les différents paliers 22 du turbopropulseur 10 et un circuit hydraulique de réglage d'un pas de l'hélice 12, le turbopropulseur 10 selon ce premier mode de réalisation comprend, comme illustré par le schéma cinématique de la figure 2, une pompe à huile moteur 21. Cette pompe à huile moteur 21 est, selon le principe de l'invention, configurée pour être entraînée électriquement. Pour ce faire, la turbopropulseur 10 comprend en outre une machine électrique tournante auxiliaire 21A couplée mécaniquement à la pompe à huile moteur 21.

La machine électrique auxiliaire tournante 21A est préférentiellement accouplée à la pompe à huile moteur 21 de façon qu'en fonctionnement normal, la pompe à huile principale 21 n'entraine pas la pompe électrique 21A. Une telle configuration peut notamment être obtenue au moyen d'une roue libre non figurée.

Dans la cadre de ce premier mode de réalisation et selon une configuration usuelle d'un turbopropulseur, la pompe à huile moteur 21 est en outre couplée mécaniquement à une turbine du turbopropulseur 10, ici la turbine à gaz 11, c'est-à-dire la turbine haute pression, du turbopropulseur. Ce couplage mécanique de la pompe à huile moteur 21 est fourni au moyen d'une première roue libre 132 de telle manière que la turbine à gaz entraîne la pompe à huile moteur lorsque le turbopropulseur est en fonctionnement et en ce que la turbine à gaz 11 soit découplée mécaniquement de la pompe à huile moteur 21 lorsque cette dernière est entraînée par la machine électrique tournante auxiliaire 21A.

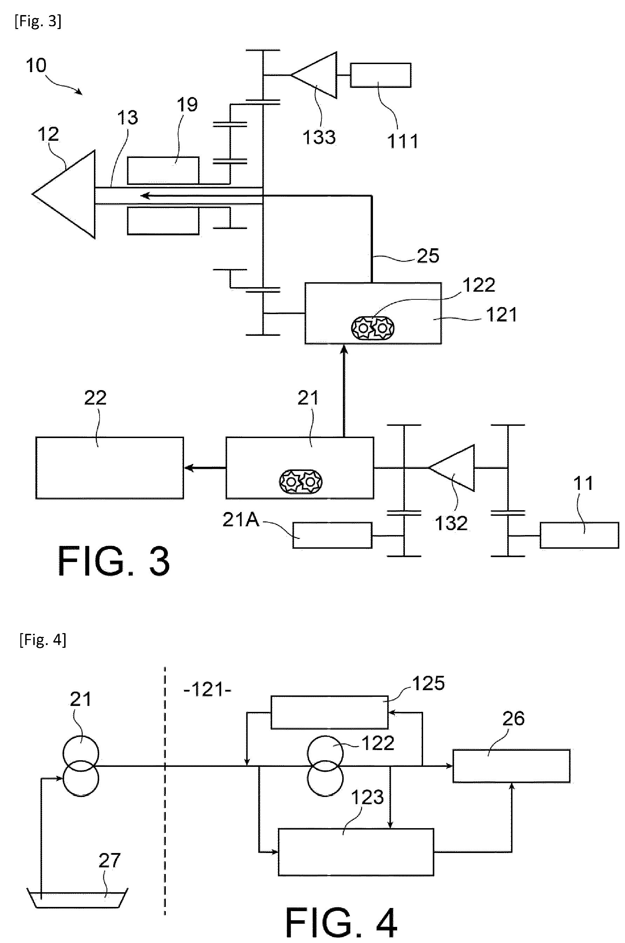

On notera, de plus, comme montré sur la figure 2, dans le cadre de l'amorçage du mode de fonctionnement du type éolienne de secours, qu'il est prévu un système de contournement adapté pour, lorsque la pompe à huile moteur 21 est entraînée électriquement, autoriser, via la servovalve 26, une alimentation en huile du circuit hydraulique de réglage 25 d'un pas de l'hélice 12 en contournant la pompe à huile dédiée 122 d'un système de gestion du pas d'hélice 121. Un tel contournement permet d'optimiser l'alimentation en huile du circuit hydraulique de réglage 25 comme cela est décrit ci-après en lien avec la figure 4.

Un tel turbopropulseur 10 est adapté pour la mise en œuvre d'un procédé de commande de cette dernière en tant qu'éolienne de secours, le procédé comprenant les étapes suivantes :
- entraîner la pompe à huile moteur 21 électriquement au moyen de la machine électrique tournante auxiliaire 21A de manière à alimenter en huile le circuit hydraulique de réglage du pas de l'hélice 12,
- régler le pas de l'hélice afin de l'effet de moulinet pour entraîner l'hélice en rotation, ce réglage étant préférentiellement réalisé de telle manière à maximiser ledit effet moulinet,
- la machine électrique tournante 19 étant entraînée en rotation par l'arbre porte hélice 13 en raison du couplage mécanique entre eux, génération d'électricité par la machine électrique tournante 19.

On notera que le turbopropulseur 10 comprend, pour la mise en œuvre d'un tel procédé une unité de contrôle, également connue sous le sigle anglais FADEC, pour « *Full Authority Digital Engine Control »,* qui est configurée pour la mise en œuvre d'un tel procédé de commande lorsque le turbopropulseur 10 est commandée pour être placée en mode éolienne de secours.

Pour ce faire lors de l'étape d'entraînement de la pompe à huile moteur 21 électriquement, le turbopropulseur 10 peut présenter la configuration cinétique schématique illustrée sur la figure 2.

Ainsi, comme illustré sur la figure 2, dans le cadre de l'amorçage du mode éolienne de secours, la machine électrique tournante 19 est directement couplée à l'arbre porte-hélice 13, et donc à l'hélice 12 au moyen d'un ensemble d'engrenages pour réaliser une adaptation de vitesse entre la machine électrique tournante 19 et l'arbre porte-hélice 13. Parmi cet ensemble d'engrenages, l'engrenage d'entrée de l'arbre porte-hélice 13 est également couplé à la turbine libre 111 de la turbine à gaz 11, au travers d'une deuxième roue libre 133, et à l'unité de commande d'hélice 121. On notera que, pour des raisons de simplification du schéma cinématique, la turbine libre 111 est artificiellement séparée de la turbine à gaz, puisque la turbine libre 111 est découplée en rotation de l'arbre de turbine 14. La pompe à huile moteur 21 est couplée mécaniquement à la machine électrique tournante auxiliaire 21A de manière à ce que la pompe à huile moteur 21 soit entraînée électriquement par la machine électrique tournante auxiliaire 21A. La pompe à huile moteur 21 est également couplée mécaniquement à la turbine à gaz 11, ou plus précisément à la turbine haute pression et à l'arbre de turbine 14, au moyen de la première roue libre 132.

Avec de telles roues libres 132, 133, il n'est pas nécessaire d'utiliser des systèmes d'accouplement sélectif lors du passage du mode de propulsion classique, fournie par la turbine à gaz 11, au mode éolienne de secours. Le mécanisme d'entraînement s'en trouve donc simplifié et présente donc, de ce fait, une maintenance simplifiée. Ainsi, ces roues libres 132, 133 permettent de découpler la pompe à huile moteur 21 de la turbine à gaz 11 lorsqu'elle est entrainée électriquement et de découpler l'arbre porte hélice 13 de la turbine libre 111, lorsque le turbopulseur 10 fonctionne en mode éolienne de secours. Comme indiqué plus haut, dans le cadre de ce premier mode de réalisation, le système de contournement autorise une alimentation en huile, via la servovalve 26, illustrée sur la figure 4, du circuit hydraulique de réglage 25 du pas de l'hélice 12 en contournant la pompe à huile dédiée 122 du système de gestion du pas d'hélice 121 qui, en étant entraînée par l'arbre porte-hélice 13, est à l'arrêt tant que l'hélice 12 n'est pas mise en rotation.

On notera que, selon ce mode de réalisation, conformément à une configuration usuelle d'un turbopropulseur 10, la pompe à huile dédiée 122 fait partie d'une unité de commande de turbopropulseur (système de gestion du pas d'hélice 121, également connue sous le sigle anglais PCU pour « propeller control unit »), ou d'une unité de commande et de protection de turbopropulseur (également connue sous le sigle anglais PCPU pour « propeller control and protection unit », désigné également dans le présent texte par « système de gestion du pas d'hélice 121 »). De même, la machine électrique tournante 19 peut être incluse dans une boîte d'engrenage d'accessoire et de puissance (également connue sous le sigle anglais PAGB pour « Power and Accessory Gear Box »). Cet entraînement de la pompe à huile moteur 21 par la machine électrique tournante 21A, permet ainsi l'alimentation en huile du circuit hydraulique de réglage du pas de l'hélice 12 via le système de gestion du pas d'hélice 121 et donc une modification du pas de l'hélice 12. On notera que dans cette configuration, la pompe à huile moteur 21 permet également d'alimenter les paliers 22 du turbopropulseur 10. Une fois que le réglage du pas de l'hélice permet de profiter de l'effet de moulinet entraînant l'hélice en rotation, l'amorçage du mode éolienne de secours est réalisé et l'hélice 12 commence à tourner.

Ainsi, dans le mode éolienne de secours, l'hélice ayant commencée à tourner, le schéma cinématique du turbopropulseur 10 évolue et devient conforme au schéma présenté sur la figure 3. On peut voir que ce schéma cinématique se distingue de celui de l'amorçage illustré sur la figure 2 : la pompe à huile dédiée 122 du système de gestion du pas d'hélice 121, étant entraînée en rotation, ne présente plus un obstacle au passage de l'huile venant de la pompe à huile moteur 21. De ce fait, comme cela est décrit ci-après en lien avec la figure 4, le circuit de contournement est rendu inactif et la servovalve 26 est alimentée au travers de la pompe à huile dédiée123 permettant l'alimentation du circuit hydraulique de réglage 25 et, de ce fait, un réglage adapté du pas de l'hélice 12.

Dans le cadre de ce schéma cinématique, la machine électrique tournante 19, en étant entrainée en rotation par l'hélice 12, fournie une génération d'électricité pour alimenter, selon le principe d'une éolienne de secours, l'aéronef équipé et ainsi assurer la continuité de fonctionnement des systèmes de bord essentiel tels que les contrôles de vol et les instruments de vol critiques.

La figure 4 illustre le circuit d'huile du turbopropulseur 10 selon ce premier mode de réalisation. On peut voir que, selon une configuration usuelle d'un turbopropulseur 10, la pompe à huile moteur 21 permet de récupérer les huiles rassemblées dans le fond de la boîte d'accessoires 27 afin de les réinjecter dans le circuit d'huile. Ainsi une partie de cette huile est transmise à la servovalve 26 au travers de la pompe à huile dédiée 122 du système de gestion du pas d'hélice 121. Le système de contournement, afin de permettre une alimentation de la servovalve 26 alors que la pompe à huile de boîte dédiée 122 est à l'arrêt comprend une vanne de contournement 123 commandée en fonction de la pression d'huile fournie par la pompe à huile 122 du système de gestion du pas d'hélice 121. Ainsi, lorsque la pression d'huile fournie par la pompe à huile dédiée 122 du système de gestion du pas d'hélice 121 est inférieure à une certaine valeur, c'est-à-dire que la pompe à huile dédiée 122 du système de gestion du pas d'hélice 121 est à l'arrêt ou tourne peu, la vanne de contournement 123 est ouverte pour permettre une alimentation de la servovalve 26 en contournant la pompe à huile dédiée 122 du système de gestion du pas d'hélice 121. Après amorçage du mode éolienne de secours, la pompe à huile dédiée 122 du système de gestion du pas d'hélice 121 étant entraînée en rotation par l'arbre porte-hélice, la pression d'huile fournie par la pompe à huile dédiée 122 du système de gestion du pas d'hélice 121 augmente. Lorsque la pression d'huile fournie par la pompe à huile dédiée 122devient supérieure à une certaine valeur jugée suffisante, par exemple supérieure ou égale à 2, voire 4 bars, la vanne de contournement 123 peut être fermée et ainsi ne conserver l'alimentation en huile de la servovalve 26 que par la pompe à huile dédiée 122 du système de gestion du pas d'hélice 121.

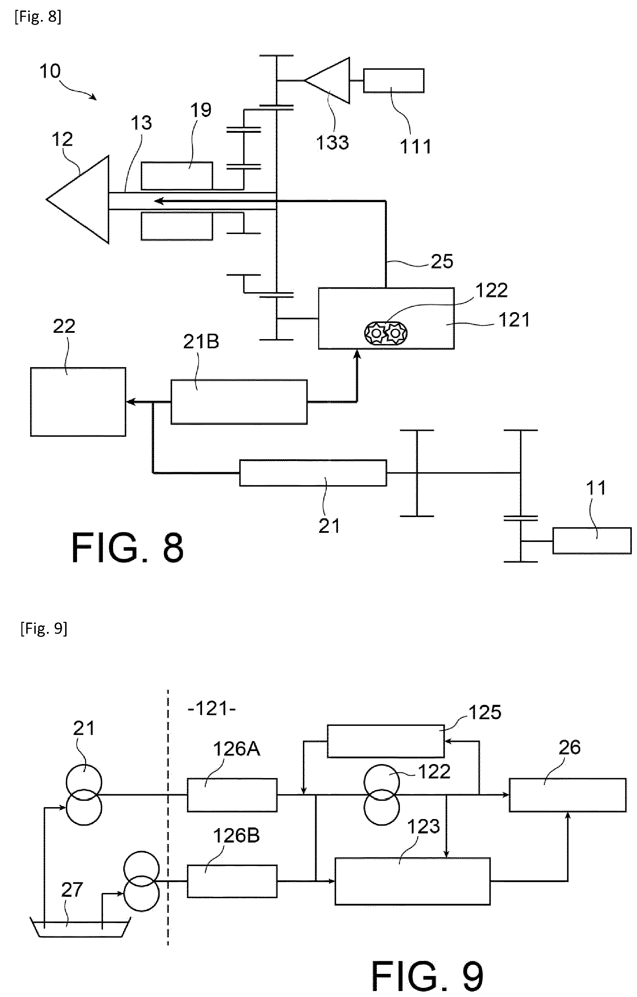

On notera que, sur les figures 4 et 9, est figurée une servovalve 26 commandé par une unité de contrôle du turbopropulseur 10 afin de régler la pression hydraulique transmise à l'actionneur, non illustré, permettant de régler le pas de l'hélice 12.

Le circuit d'huile du turbopropulseur 10 peut également comprendre, comme illustré sur la figure 4 une vanne de surpression 125 adaptée pour recirculer le flux d'huile généré par la pompe à huile dédiée 122 du système de gestion du pas d'hélice 121 qui est en excès par rapport à la consommation d'huile demandée par l'hélice 12. Une telle vanne de surpression 125 peut ainsi, par exemple, être réglée pour limiter la pression appliquée au circuit hydraulique de réglage du pas de l'hélice à valeur inférieure à 50 bars, voire à 35 bars, voire encore à 25 bars.

Un tel turbopropulseur 10 permet, lorsqu'il équipe un aéronef, de fournir une fonction d'éolienne de secours. Lorsqu'un aéronef est équipé d'une pluralité de turbopropulseurs 10 selon l'invention, il peut être configuré pour mettre en œuvre un procédé de commande comprenant, alors que l'aéronef est en vol, les étapes suivantes :
- l'ensemble des turbopropulseurs 10 de la pluralité de turbopropulseurs étant passé à l'arrêt, réception d'une requête de placement d'au moins une turbomachine dans un mode de fonctionnement du type éolienne de secours,
- mise en œuvre, par l'un des turbopropulseurs 10 de la pluralité de turbopropulseurs, d'un procédé de commande de ce dernier en tant qu'éolienne de secours, telle que précité, ce turbopropulseur 10 étant de manière préférentielle le turbopropulseur 10 parmi la pluralité de turbopropulseurs qui est le dernier à s'être arrêté.

On notera que, dans le cas où, lors de la mise en œuvre du procédé de commande par le dernier turbopropulseur à s'être arrêté, celui-ci s'avère incapable de passer en mode éolienne de secours, il peut être identifié parmi les autres turbopropulseurs de la pluralité de turbopropulseurs 10 celui-présentant une température d'huile la plus élevée. Une fois identifié ledit turbopropulseur 10 présentant une température d'huile la plus élevée, ce dernier peut être configuré pour mettre en œuvre le procédé de commande selon l'invention pour être placé en mode éolienne de secours.

Que ce soit pour l'identification u dernier turbopropulseur 10 à s'être arrêté, ou l'identification de la turbopropulseur 10, parmi les autres turbopropulseurs 10, celui-présentant une température d'huile la plus élevée, chaque turbopropulseur 10 peut avoir son unité de contrôle configurée pour communiquer avec les unités de contrôle des autres turbopropulseurs de l'aéronef. Selon cette possibilité, les unités de contrôle peuvent communiquées entre-elles des informations d'état telles qu'un état de fonctionnement, pour savoir qu'elle est le dernier turbopropulseur à s'être arrêté, et une température d'huile, pour identifier le turbopropulseur 10, parmi les autres propulseurs 10, celui-présentant une température d'huile la plus élevée.

On notera, qu'en variante, ce peut être une unité de contrôle de l'aéronef ou un pilote de l'aéronef qui détermine qu'elle est le turbopropulseur 10 à passer en mode éolienne de secours et qui commande ledit turbopropulseur 10 pour mettre en œuvre le procédé de commande déjà décrit.

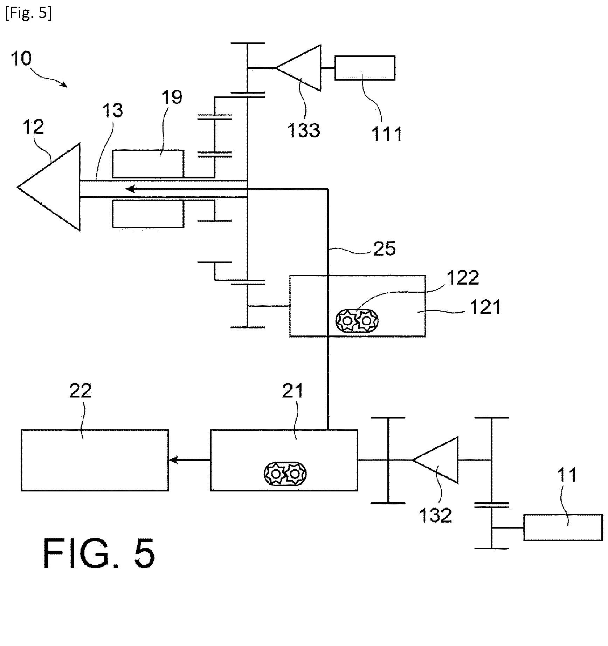

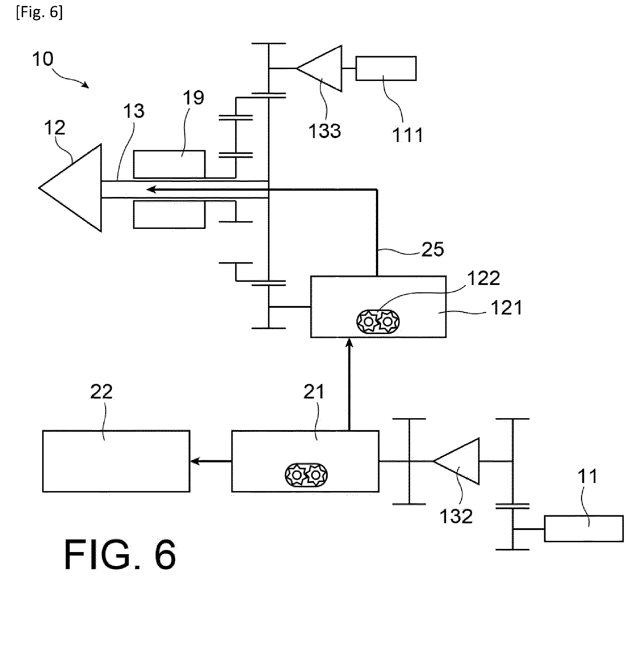

Les figures 5 et 6 illustrent les schémas cinématiques de l'amorçage du mode éolienne de secours et du mode éolienne de secours dans le cadre d'un deuxième mode de réalisation de l'invention dans lequel la pompe à huile moteur 21 est une pompe hybride configurée pour être entrainée à la fois électriquement et par la turbine à gaz.

Ainsi, une turbomachine 10 selon ce deuxième mode de réalisation se différencie d'un turbopropulseur 10 selon le premier mode de réalisation en ce que la pompe à huile moteur est une pompe hybride et en ce qu'il n'est pas prévu de machine électrique tournante auxiliaire 21A.

De cette manière, conformément au premier mode de réalisation et comme illustré sur la figure 5, lors de l'amorçage du mode éolienne de secours du turbopropulseur, la pompe à huile moteur 21 est entraînée électriquement par un moteur électrique interne et permet d'alimenter à la fois les paliers 22 du turbopropulseur 10 et le circuit hydraulique de réglage 25. Le système de contournement, selon une configuration similaire à celle illustrée sur la figure 4, permet d'alimenter le circuit hydraulique de réglage 25 en contournant la pompe à huile dédiée 122 du système de gestion du pas d'hélice 121.

Comme illustré sur la figure 6, une fois l'amorçage du mode éolienne réalisé et l'hélice mise en rotation, la pompe à huile dédiée 122 du système de gestion du pas d'hélice 121 étant entrainée par l'arbre porte-hélice 13, le système de contournement devient inopérant et l'alimentation de la servovalve 26 est réalisée par la pompe huile moteur 21 au travers de la pompe à huile dédiée 122 du système de gestion du pas d'hélice 121 comme décrit dans le cadre du premier mode de réalisation.

Un turbopropulseur 10 selon ce deuxième mode de réalisation peut être placé dans un mode éolienne de secours selon un procédé de commande identique à celui du premier mode de réalisation

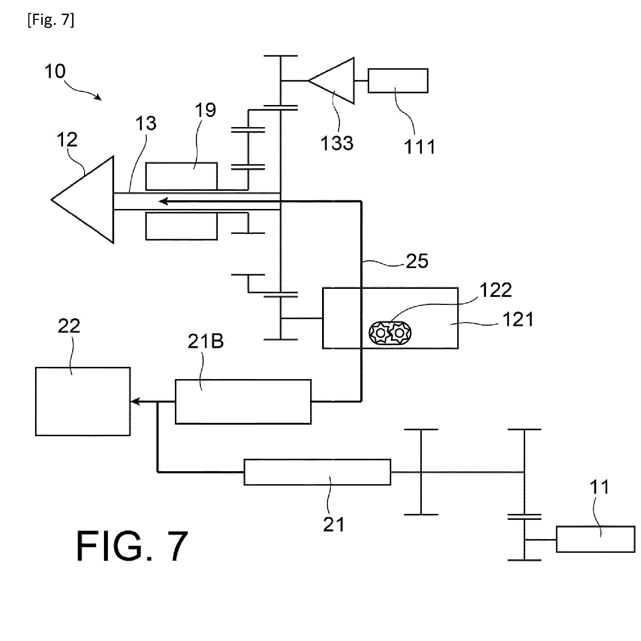

Les figures 7 et 8 illustrent les schémas cinématiques de l'amorçage du mode éolienne de secours et du mode éolienne de secours dans le cadre d'un troisième mode de réalisation de l'invention dans lequel il est prévu une pompe à huile électrique auxiliaire 21B adaptée pour être entraînée électriquement et pour alimenter en huile la servovalve 26 et les paliers 22 du turbopropulseur 10.

Un turbopropulseur 10 selon ce troisième mode de réalisation se différencie d'un turbopropulseur 10 selon le premier mode de réalisation en ce qu'il comprend la pompe à huile électrique auxiliaire 21B en parallèle à la pompe à huile moteur 21 et en ce qu'il n'est pas prévu de machine électrique tournante auxiliaire 21A.

De cette manière, conformément au premier mode de réalisation et comme illustré sur la figure 7, lors de l'amorçage du mode éolienne de secours du turbopropulseur 10, alors que la pompe à huile moteur 21 est à l'arrêt, la pompe à huile électrique auxiliaire 21B est entraînée électriquement et permet d'alimenter à la fois les paliers 22 du turbopropulseur 10 et la servovalve 26 du système de gestion du pas d'hélice 121 puis le circuit hydraulique de réglage 25. Un système de contournement, selon une configuration qui est décrite ci-après en lien avec la figure 9, permet ici encore d'alimenter le circuit hydraulique de réglage 25 via la servovalve 26 en contournant la pompe à huile 122 du système de gestion du pas d'hélice 121.

De la même manière que pour les premier et deuxième mode de réalisation et comme illustré sur le figure 8, une fois l'amorçage du mode éolienne réalisé et l'hélice mise en rotation, la pompe à huile dédiée 122 du système de gestion du pas d'hélice 121 étant entrainée par l'arbre porte-hélice 13, le système de contournement devient inopérant et l'alimentation du circuit hydraulique de réglage 25 est réalisé par la pompe à huile électrique auxiliaire 21B au travers de la pompe à huile dédiée 122 et de la servovalve 26 du système de gestion du pas d'hélice 121 comme décrit dans le cadre du premier mode de réalisation.

La figure 9 illustre le circuit d'huile de la turbopropulseur 10 selon ce troisième mode de réalisation. Un tel circuit d'huile se différencie d'un circuit d'huile selon le premier mode de réalisation en ce qu'il est prévu deux circuits d'alimentation en huile en parallèle l'un de l'autre, l'un fourni par la pompe à huile moteur 21 et l'autre par la pompe à huile électrique auxiliaire 21B pour alimenter à la fois la servovalve 26 du système de gestion du pas d'hélice 121 et les paliers 22 du turbopropulseur 10. Ainsi, comme montré sur la figure 9, chacune de la pompe à huile moteur 21 et de la pompe à huile électrique auxiliaire 21B permet de récupérer les huiles rassemblées dans le fond de la boîte d'accessoires 27 afin de les réinjecter dans le circuit d'huile.

Afin d'éviter une perte de pression dans la pompe inactive, parmi la pompe à huile moteur 21 et la pompe à huile électrique auxiliaire 21B, il prévu sur chacun des circuits d'alimentation fourni par la pompe à huile moteur 21 et la pompe à huile électrique auxiliaire 21B, un système de clapet anti-retour 126A, 126B.

## Revendications

1. Turbopropulseur(10) comprenant :
- une hélice (12),
- un arbre porte-hélice (13) portant l'hélice (12), l'hélice (12) étant une hélice à pas variable présentant un pas de l'hélice,
- une machine électrique tournante (19) présentant au moins une première configuration dans laquelle elle est couplée mécaniquement à l'arbre porte hélice (13), et
- au moins une pompe à huile (21, 21B) configurée pour alimenter un circuit hydraulique de réglage du pas de l'hélice (12), configurée pour être entraînée électriquement, le turbopropulseur (10) **étant caractérisé en ce que** la pompe à huile est également configurée pour alimenter en fluide des paliers (22) du turbopropulseur (10).

2. Turbopropulseur (10) selon la revendication 1, dans lequel la pompe à huile (21) est une pompe à huile moteur configurée pour en outre être entraînée par une turbine (11) du turbopropulseur (10), la pompe à huile moteur (21) étant préférentiellement couplée mécaniquement à ladite turbine (11) au moyen d'une roue-libre (132).

3. Turbopropulseur (10) selon la revendication 2, dans lequel la pompe à huile (21) est une pompe à huile moteur hybride configurée pour être entraînée soit par la turbine (11), soit par un moteur électrique interne à la pompe à huile moteur (21).

4. Turbopropulseur (10) selon la revendication 1, dans lequel la pompe à huile (21B) est une pompe électrique auxiliaire (21B) alimentant le circuit hydraulique de réglage (25) d'un pas de l'hélice (12) en parallèle à une pompe à huile moteur (21) du turbopropulseur (10) entraînée en rotation par une turbine (11) du turbopropulseur (10).

5. Turbopropulseur (10) selon l'une quelconque des revendications 1 à 4 comprenant en outre un système de gestion du pas d'hélice (121) comportant une pompe à huile dédiée (122) et une servovalve (26), la pompe à huile dédiée (122) et la servovalve (36) étant alimentées en huile par la pompe à huile (21, 21B), le système de gestion du pas de l'hélice (121) étant agencé entre la pompe à huile (21, 21B) et le circuit hydraulique de réglage (25) du pas de l'hélice (12),
dans lequel, le turbopropulseur (10) comprend en outre un système de contournement adapté pour, lorsque la pompe à huile (21, 21B) est entraînée électriquement, autoriser une alimentation en huile du circuit hydraulique de réglage d'un pas de l'hélice (12) via la servovalve (26) en contournant la pompe à huile dédiée (122) du système de gestion du pas d'hélice (121).

6. Aéronef comprenant au moins un turbopropulseur (10) selon l'une quelconque des revendications 1 à 5.

7. Procédé de commande d'un turbopropulseur (10) en tant qu'éolienne de secours, dans lequel le turbopropulseur (10) est un turbopropulseur selon l'une quelconque des revendications 1 à 5, le procédé comprenant les étapes suivantes :
- entraîner la pompe à huile (21, 21B) électriquement de manière à alimenter en huile le circuit hydraulique de réglage (25) d'un pas de l'hélice (12) et des paliers (22) du turbopropulseur (10),
- régler le pas de l'hélice (12) afin de générer l'effet de moulinet pour entraîner l'hélice (12) en rotation,
- la machine électrique tournante (19) étant entraînée en rotation par l'arbre porte hélice (13) en raison du couplage mécanique entre eux, générer de l'électricité par la machine électrique tournante (19).

8. Procédé de commande d'un aéronef comprenant une pluralité de turbopropulseurs (10) selon l'une quelconque des revendications 1 à 5, comprenant, alors que l'aéronef est en vol, les étapes suivantes :
- la pluralité de turbopropulseurs (10) étant passé à l'arrêt, réception d'une requête de placement d'au moins un turbopropulseur (10) dans un mode de fonctionnement du type éolienne de secours,
- mise en œuvre par un turbopropulseur (10) de la pluralité de turbopropulseurs d'un procédé de commande selon la revendication 7.

9. Procédé de commande selon la revendication 8, dans lequel, lors de la mise en œuvre par un turbopropulseur (10) de la pluralité des turbopropulseurs d'un procédé de commande selon la revendication 7, le turbopropulseur (10) mettant en œuvre le procédé de commande selon la revendication 7 est le turbopropulseur (10) parmi la pluralité des turbopropulseurs (10) qui est le dernier à s'être arrêté.

10. Procédé de commande selon la revendication 9, dans lequel il est en outre prévu :
- dans le cas où lors de la mise en œuvre du procédé de commande par le dernier turbopropulseur (10) à s'être arrêtée, celui-ci s'avère incapable de passer en mode éolienne de secours, identification parmi les autres turbopropulseurs (10) de la pluralité de turbopropulseurs (10) celui présentant une température d'huile la plus élevée,
- mise en œuvre par le turbopropulseur (10) identifié du procédé de commande selon la revendication 7.

## Patentansprüche

1. Turbopropeller (10), umfassend:
- einen Propeller (12),
- eine Propellerträgerwelle (13), die den Propeller (12) trägt, wobei der Propeller (12) ein Propeller mit variabler Steigung ist, der eine Steigung des Propellers besitzt,
- eine sich drehende elektrische Maschine (19), die mindestens eine erste Konfiguration besitzt, bei der sie mechanisch mit der Propellerträgerwelle (13) gekoppelt ist, und
- mindestens eine Ölpumpe (21, 21B), die so ausgebildet ist, dass sie einen hydraulischen Regelkreis zum Einstellen der Steigung des Propellers (12) versorgt, der so ausgebildet ist, dass er elektrisch angetrieben wird, wobei der Turbopropeller (10) **dadurch gekennzeichnet ist, dass** die Ölpumpe auch so ausgebildet ist, dass sie die Lager (22) des Turbopropellers (10) mit Fluid versorgt.

2. Turbopropeller (10) nach Anspruch 1, wobei die Ölpumpe (21) eine Motorölpumpe ist, die so ausgebildet ist, dass sie zusätzlich von einer Turbine (11) des Turbopropellers (10) angetrieben wird, wobei die Motorölpumpe (21) vorzugsweise über einen Freilauf (132) mechanisch mit der Turbine (11) gekoppelt ist.

3. Turbopropeller (10) nach Anspruch 2, wobei die Ölpumpe (21) eine Hybrid-Motorölpumpe ist, die so ausgebildet ist, dass sie entweder von der Turbine (11) oder von einem Elektromotor innerhalb der Motorölpumpe (21) angetrieben wird.

4. Turbopropeller (10) nach Anspruch 1, wobei die Ölpumpe (21B) eine elektrische Hilfspumpe (21B) ist, die den hydraulischen Regelkreis (25) mit einer Steigung des Propellers (12) parallel zu einer von einer Turbine (11) des Turbopropellers (10) in Drehung angetriebenen Motorölpumpe (21) des Turbopropellers (10) versorgt.

5. Turbopropeller (10) nach einem der Ansprüche 1 bis 4, ferner umfassend ein Propellersteigungs-Managementsystem (121) mit einer dedizierten Ölpumpe (122) und einem Servoventil (26), wobei die dedizierte Ölpumpe (122) und das Servoventil (36) von der Ölpumpe (21, 21B) mit Öl versorgt werden, wobei das Propellersteigungs-Managementsystem (121) zwischen der Ölpumpe (21, 21B) und dem hydraulischen Regelkreis (25) der Propellersteigung (12) angeordnet ist,
wobei der Turbopropeller (10) ferner ein Umgehungssystem umfasst, dass dazu ausgelegt ist, eine Ölversorgung des hydraulischen Regelkreises zum Einstellen einer Propellersteigung (12) über das Servoventil (26) durch Umgehen der dedizierten Ölpumpe (122) des Propellersteigungs-Managementsystems (121) zu ermöglichen, wenn die Ölpumpe (21, 21B) elektrisch angetrieben wird.

6. Luftfahrzeug, umfassend mindestens einen Turbopropeller (10) nach einem der Ansprüche 1 bis 5.

7. Steuerverfahren eines Turbopropellers (10) als Ram-Air-Turbine, wobei der Turbopropeller (10) ein Turbopropeller nach einem der Ansprüche 1 bis 5 ist, wobei das Verfahren die folgenden Schritte umfasst:
- elektrisches Betätigen der Ölpumpe (21, 21B), so dass sie den hydraulischen Regelkreis (25) der Propellersteigung (12) und der Lager (22) des Turbopropellers (10) mit Öl versorgt,
- Einstellen der Propellersteigung (12), um einen Windradeffekt zu erzeugen, um den Propeller (12) in Drehung zu bringen,
- wobei die sich drehende elektrische Maschine (19) aufgrund der mechanischen Kopplung zwischen ihnen durch die Propellerträgerwelle (13) in Drehung versetzt wird, um durch die sich drehende elektrische Maschine (19) Strom zu erzeugen.

8. Steuerverfahren eines Flugzeugs, das eine Vielzahl von Turbopropellern (10) nach einem der Ansprüche 1 bis 5 umfasst, wobei das Flugzeug während des Flugs die folgenden Schritte umfasst:
- Empfangen einer Anforderung zum Platzieren mindestens eines Turbopropellers (10) in einen Ram-Air-Turbinen-Betriebsmodus, nachdem die Vielzahl von Turbopropellern (10) abgeschaltet wurden,
- Umsetzen eines Steuerverfahrens nach Anspruch 7 durch einen Turbopropeller (10) der Vielzahl von Turbopropellern.

9. Steuerverfahren nach Anspruch 8, wobei bei dem Umsetzen eines Steuerverfahrens nach Anspruch 7 durch einen Turbopropeller (10) aus der Vielzahl von Turbopropellern der Turbopropeller (10), der das Steuerverfahren nach Anspruch 7 umsetzt, derjenige Turbopropeller (10) aus der Vielzahl von Turbopropellern (10) ist, der als letzter abgeschaltet wurde.

10. Steuerverfahren nach Anspruch 9, wobei ferner Folgendes vorgesehen ist:
- wenn sich bei dem Umsetzen des Steuerverfahrens durch den zuletzt abgeschalteten Turbopropeller (10) herausstellt, dass dieser nicht in den Ram-Air-Turbinen-Betriebsmodus wechseln kann, Identifizieren desjenigen unter den anderen Turbopropellern (10) der Vielzahl von Turbopropellern (10) mit der höchsten Öltemperatur,
- Umsetzen des Steuerverfahrens nach Anspruch 7 durch den identifizierten Turbopropeller (10).

## Claims

1. A turboprop (10) comprising:
∘ a propeller (12),
∘ a propeller shaft (13) carrying the propeller (12), the propeller (12) being a variable-pitch propeller having a propeller pitch,
∘ a rotating electric machine (19) having at least a first configuration in which it is mechanically coupled to the propeller shaft (13), and
∘ at least one oil pump (21, 21B) configured to supply a hydraulic circuit for adjusting the propeller pitch (12), the at least one oil pump being configured to be electrically operated,
wherein the at least one oil pump is also configured to supply fluid to bearings (22) of the turboprop (10).

2. The turboprop (10) according to claim 1, wherein the at least one oil pump (21) is an engine oil pump designed to also be driven by a turbine (11) of the turboprop (10), the engine oil pump (21) being mechanically coupled to said turbine (11) by means of a freewheel (132).

3. The turboprop (10) according to claim 2, wherein the at least one oil pump (21) is a hybrid engine oil pump designed to be driven either by the turbine (11) or by an electric motor inside the engine oil pump (21).

4. The turboprop (10) according to claim 1, wherein the at least one oil pump (21B) is an auxiliary electric pump (21B) supplying the hydraulic circuit for adjusting the propeller pitch (25) in parallel with an engine oil pump (21) of the turboprop (10) rotationally driven by a turbine (11) of the turboprop (10).

5. The turboprop (10) according to any one of claims 1 to 4, further comprising a system for managing the propeller pitch (121) including a dedicated oil pump (122) and a servo valve (26), the dedicated oil pump (122) and the servo valve (26) being supplied with oil by the at least one oil pump (21, 21B), the system for managing the propeller pitch (121) being arranged between the at least one oil pump (21, 21B) and the hydraulic circuit for adjusting the propeller pitch (25),
wherein the turboprop (10) further comprises a bypass system which, when the at least one oil pump (21, 21B) is electrically operated, is adapted to allow oil to be supplied to the hydraulic circuit for adjusting the propeller pitch (12) via the servo valve (26) by bypassing the dedicated oil pump (122) of the system for managing the propeller pitch (121).

6. An aircraft comprising at least one turboprop (10) according to any one of claims 1 to 5.

7. A method for controlling a turboprop (10) as a ram air turbine, wherein the turboprop (10) is a turboprop according to any one of claims 1 to 5, the method comprising the following steps:
∘ electrically operating the at least one oil pump (21, 21B) so as to supply oil to the hydraulic circuit for adjusting the propeller pitch (25) and to bearings (22) of the turboprop (10),
∘ adjusting the propeller pitch (12) to generate a windmill effect to rotationally drive the propeller (12),
∘ generating electricity from the rotating electric machine (19) by rotationally driving the rotating electric machine (19) by the propeller shaft (13) due to mechanical coupling between them.

8. A method for controlling an aircraft comprising a plurality of turboprops (10) according to any one of claims 1 to 5, comprising, while the aircraft is in flight:
∘ the plurality of turboprops (10) having been stopped, receiving a request to place at least one turboprop (10) in a ram air turbine operating mode,
∘ implementing a control method according to claim 7 by one turboprop (10) of the plurality of turboprops.

9. The control method according to claim 8, wherein, when implementing a control method according to claim 7 by one turboprop (10) of the plurality of turboprops, the turboprop (10) implementing the control method according to claim 7 is the turboprop (10) among the plurality of turboprops (10) that was the last to stop.

10. The control method according to claim 9, further comprising:
∘ in the event that, when implementing the control method by the last turboprop (10) to stop, it proves unable to switch to ram air turbine mode, identifying among the other turboprops (10) of the plurality of turboprops (10) the one having the highest oil temperature,
∘ implementing the control method according to claim 7 by the identified turboprop (10).
